# EUROPEAN PATENT APPLICATION

(11) **EP 0 565 289 A1**
(43) Date of publication of application: **13.10.1993**
(21) Application number: 93302439.0
(22) Date of filing: 29.03.1993
(51) Int. Cl.: H02G 15/04, H01R 13/52

(54) **Coupling**

(30) Priority: 04.04.1992 GB 9207433
(71) Applicant: HAWKE CABLE GLANDS LIMITED, Walsall Staffordshire WS9 8DS (GB)
(72) Inventor: Hand, Edward, Stalybridge, Cheshire (GB)
(74) Representative: Knowles, Audrey Elizabeth

(57) **Abstract**

An external boot seal 38 for threadably engaged parts 2,3 of a cable gland 1 to prevent ingress of foreign matter. The boot 38 is axially located on one of the parts 2 and is slidably engageable with a cylindrical outer surface 45 of the other part 3 for maintaining the seal on relative rotational and axial movement of the parts 2,3.

## Description

This invention relates to couplings and in particular, though not exclusively, to couplings between two components of a gland for cables, pipes or like elongate articles and/or between the gland and a member to which the gland is secured in use.

It is necessary when connecting an electrical cable to a fitting in hazardous areas, for example in the petrochemical industry, to seal entry of the cable by means of a cable gland fitted to the cable.

The known cable glands have two or more threadably engaged parts that are relatively rotatable during assembly for effecting a seal with the outer sheathing of the cable behind individual conductors that have been exposed by removal of the sheathing for connection to the fitting.

Foreign matter, particularly gases and liquids, can penetrate the interior of such glands via the threaded engagement of the gland parts which is undesirable, particularly in hazardous areas where there is a risk of explosion and/or fire.

To prevent ingress of foreign matter, it is known to assemble the gland with an internal seal. Fitment of the seal can only be checked by disassembling the- gland and this may not be possible or practical for many installations. As a result, incorrect fitment or omission of the seal altogether may arise in practice with potentially serious consequences.

It is an object of the present invention to provide a coupling between two threadably engaged components in which ingress of foreign matter between the components is prevented in a simple manner capable of verification without disassembling the components.

According to the present invention we provide a coupling between first and second components, the first component having an external thread engageable with an internal thread of the second component, and a tubular boot arranged to extend between an outer surface of the second component and an outer surface of the first component beyond the external thread.

Conveniently, the boot is mounted on the outer surface of one of the components and is arranged to engage rotatably and slidably a cylindrical zone of the outer surface of the other component.

Advantageously, the boot has a locating formation at one end for engagement with h a complementary locating formation on said one component to axially locate the boot thereon. For example, the locating formations may comprise an annular rib engageable in an annular groove.

Preferably, the boot has a ring formation at the other end for rotatably and slidably engaging the cylindrical zone of the outer surface of said other component. For example, the ring formation may comprise an internal annular lip.

Conveniently, the boot is made of natural or synthetic elastomeric material such as rubber or neoprene or a composite thereof.

The invented coupling is especially suitable for glands for cables, pipes or like elongate articles where the two components may comprise two parts of the gland or the gland and a member to which the gland is secured in use.

The invention will now be described in more detail by way of example with reference to the accompanying drawings, wherein:-
FIGURE 1 is a side view of a first embodiment of a cable gland;
FIGURE 2 is a longitudinal section of tile cable gland shown in Figure 1;
FIGURE 3 is a side view of a second embodiment of a cable gland;
FIGURE 4 is a longitudinal section of the cable gland shown in Figure 3;
FIGURE 5 is a longitudinal section similar to Figure 2 showing the cable gland connected to a junction box with a boot mounted on tile gland body; and
FIGURE 6 is a longitudinal section similar to Figure 5 showing the boot mounted on the junction box.

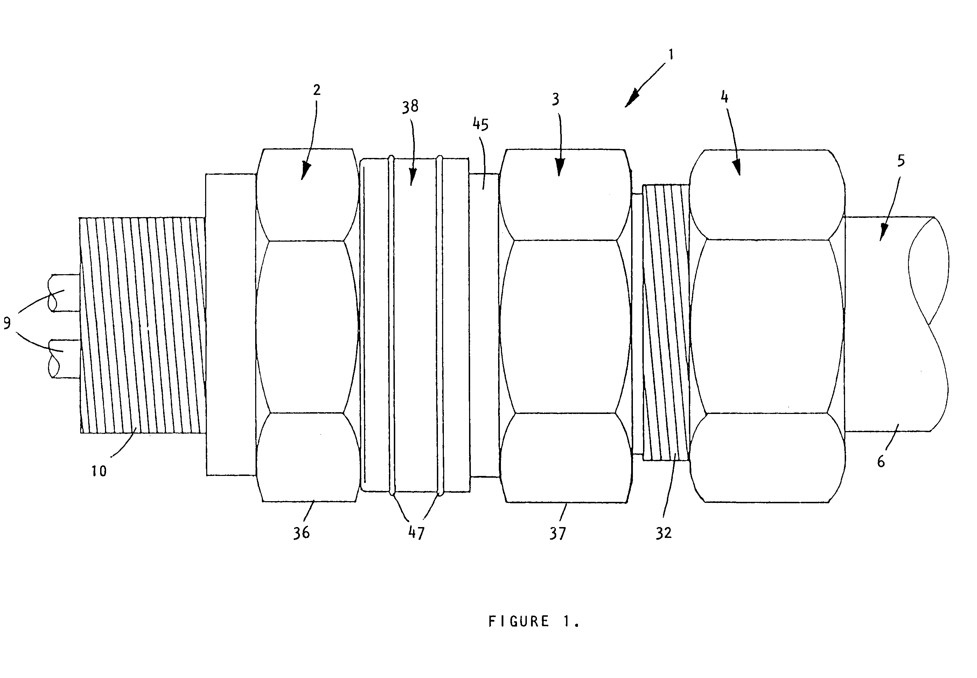

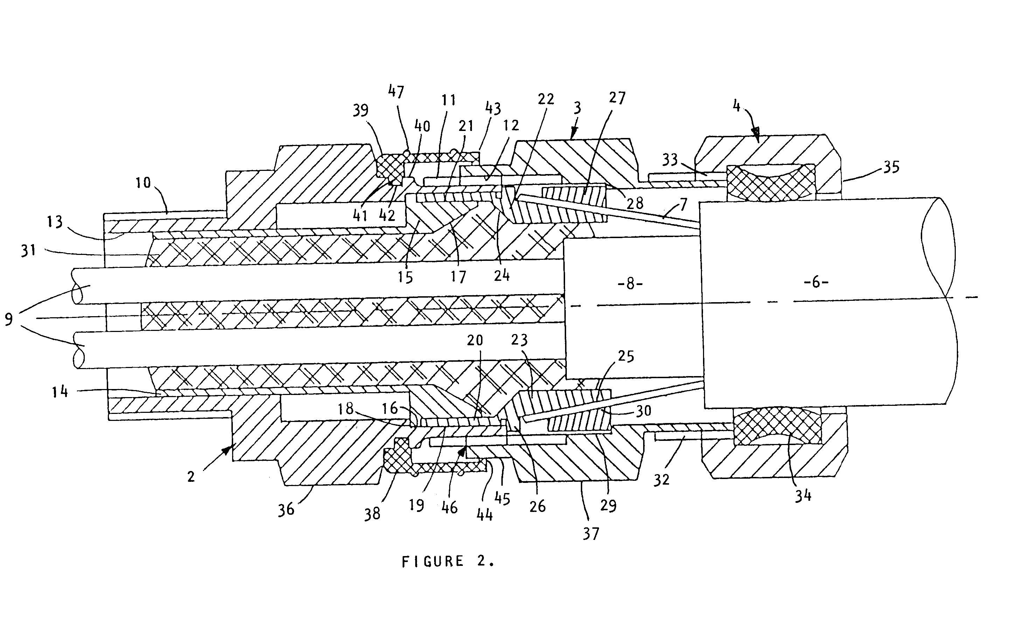

The cable gland 1 shown in Figures 1 and 2 of the drawings comprises a tubular body 2, a sleeve nut 3 and a cap nut4. The gland 1 is shown assembled with an electrical cable 5 extending therethrough to seal entry of the cable 5 to a junction box or other electrical fitting (not shown).

Prior to assembly, the cable 5 is prepared by removing part of an outer sheath 6 to expose an armour layer 7 and, beneath that, part of an inner sheath 8 is removed to expose individidual insulated conductors 9.

The gland body 2 is externally threaded at one end 10 for engagement with an internally threaded aperture (not shown) in a wall of the junction box or other electrical fitting. The other end 11 of the body 2 is externally threaded for engagement with an internally threaded end 12 of the sleeve nut 3.

The body 2 has a through bore 13 in which a separate tubular liner 14 is received. The liner 14 has an enlarged head 15 at one end formed with an external flange 16 and with an internal taper face 17.

The flange 16 seats against an abutment shoulder 18 formed by a counterbore 19 in the end of the bore 13 to axially locate the liner 14 in the body 2 and form a cylindrical clearance space 20 between the head 15 and the counterbore 19.

A cylindrical end portion 21 of a clamping ring 22 is received in the clearance space 20. The other end portion 23 of the clamping ring 22 projects from the body 2 into the sleeve 3 and is formed with internal and external taper faces 24 and 25 respectively. An external rib 26 intermediate the ends of the ring 22 is engageable with the end of the body 2 to axially locate the ring 22.

A second clamping ring 27 is received within the sleeve 3 and seated against an abutment shoulder 28 formed by a counterbore 29 at the inner end of the internal thread 12. The ring 27 has an internal taper face 30 complementary to the external taper face 25 of the ring 22 mounted in the end of the body 2.

The cable 5 is secured within the gland 1 by clamping the exposed armour layer 7 between the opposed taper faces 25,30 of the rings 22,27 which are relatively movable axially to control the clamping force on relative rotation of the sleeve 3 and body 2.

In addition, the cable 5 is sealed within the gland 1 at the exit end by encapsulating the exposed conductors 9 with filler compound 31 received within the liner 14 and clamping ring 22. The filler compound 31 may be an epoxy resin, bitumen, putty or other suitable material known to those skilled in the art.

The other end 32 of the sleeve nut 3 remote from the body 2 is externally threaded for engagement with an internally threaded end 33 of the cap nut 4. An annular sealing ring 34 is mounted within the cap nut 4 between the threaded end 33 and an internal flange 35 at the other end.

The flange 35 is a clearance fit over the outer sheath 6 of the cable 5 which is sealed within the gland 1 at the entry end by tightening the cap nut 4 onto the sleeve nut 3 whereby the latter compresses the sealing ring 34 axially and radially onto the outer sheath 6 of the cable 5. The sealing ring 34 may be made of rubber or neoprene or any other suitable elastomeric material.

The body 2 and sleeve nut 3 are each formed with an external flange 36 and 37 respectively of hexagonal shape between the threaded ends 10,11 and 12,32, and the cap nut 4 is of hexagonal shape whereby each component 2,3,4 of the gland 1 may be rotated by a spanner (not shown) or like tool for assembly of the gland 1 as above-described.

A cylindrical rubber boot 38 is mounted at one end 39 on a short cylindrical outer surface 40 formed between the flange 36 and threaded end 11 of the body 2 and is axially retained by engagement of an internal annular rib 41 in a complementary annular groove 42 formed in the surface 40.

The boot 38 extends with radial clearance over at least part of the threaded end 11 and is formed at the other end 43 remote from the ledge 40 with an internal annular lip 44 that is engageable with a cylindrical outer surface 45 of the sleeve nut 3 extending from the flange 37 towards the body 2 when the threaded ends 11,12 of the body 2 and sleeve nut 3 are engaged.

The lip 44 is rotatable and axially slidable on the cylindrical surface 45 on relative rotation of the body 2 and sleeve nut 3 whereby the coupling 46 between the threaded ends 11,12 of the body 2 and sleeve nut 3 is covered for all axially adjusted positions of the sleeve nut 3 and body 2 to prevent ingress of foreign matter such as dirt, liquids or gases.

The boot 38 is formed with two external axially spaced reinforcing rings 47 intermediate the ends to resist twisting when rotating and sliding on the outer surface 45 of the sleeve nut 3.

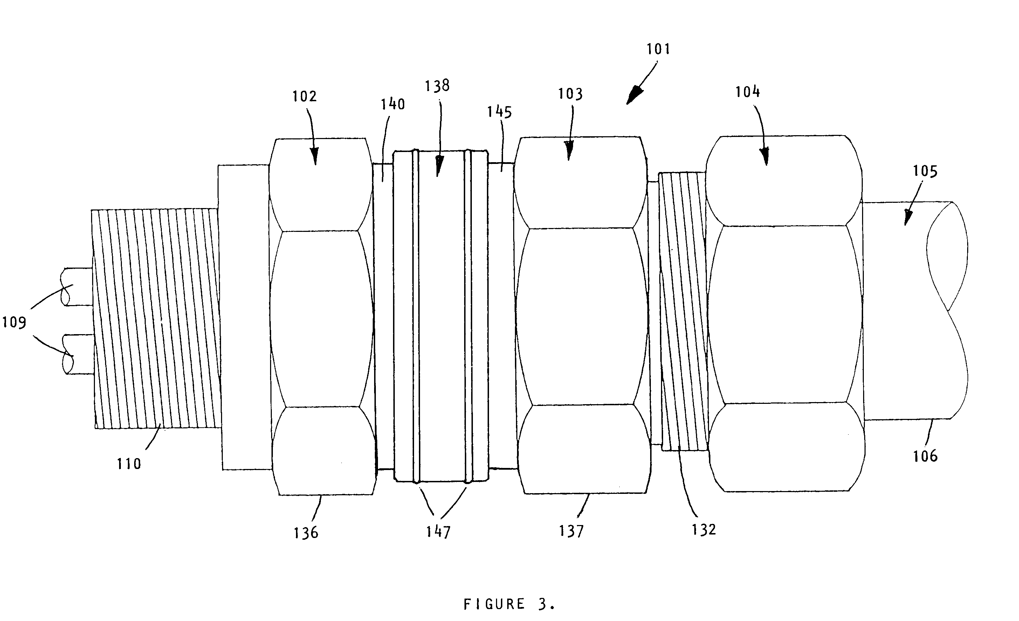

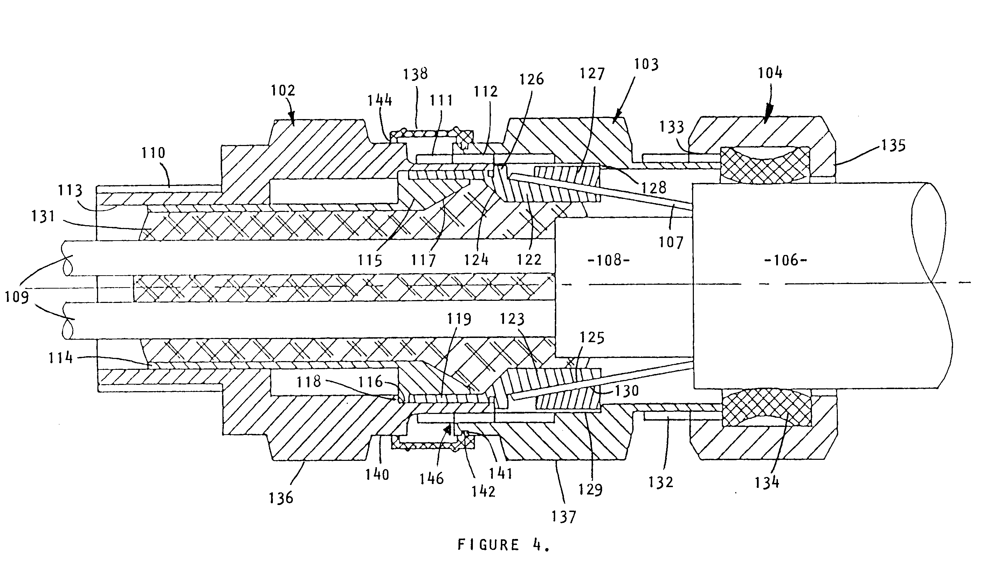

Figures 3 and 4 of the drawings show a second embodiment similar to the first embodiment above-described in which like reference numerals in the series 100 are used to indicate corresponding parts.

In this embodiment, the cylindrical boot 138 is mounted on the outer cylindrical surface 145 of the sleeve nut 103 and the internal lip 144 is rotatably and axially slidable on the outer cylindrical surface 140 of the body 102 behind the threaded end 111 of the body 102 to cover the coupling 146 for all axially adjusted positions of the sleeve nut 103 and body 102.

As will be understood from the foregoing description of two exemplary embodiments, provision of the boot to cover the coupling between the gland components avoids the use of an internal O-ring or similar means for preventing ingress of solids, liquids or gases and fitment of the boot is readily verified by visual inspection of the assembled gland without having to disassemble the gland. Additionally, the boot can be colour coded enabling different gland types and/orsi- zes to be easily identified.

It will be appreciated that the invention is not limited to the cable gland above-described but has application to all types and sizes of cable glands in which there is a coupling between two components of the gland.

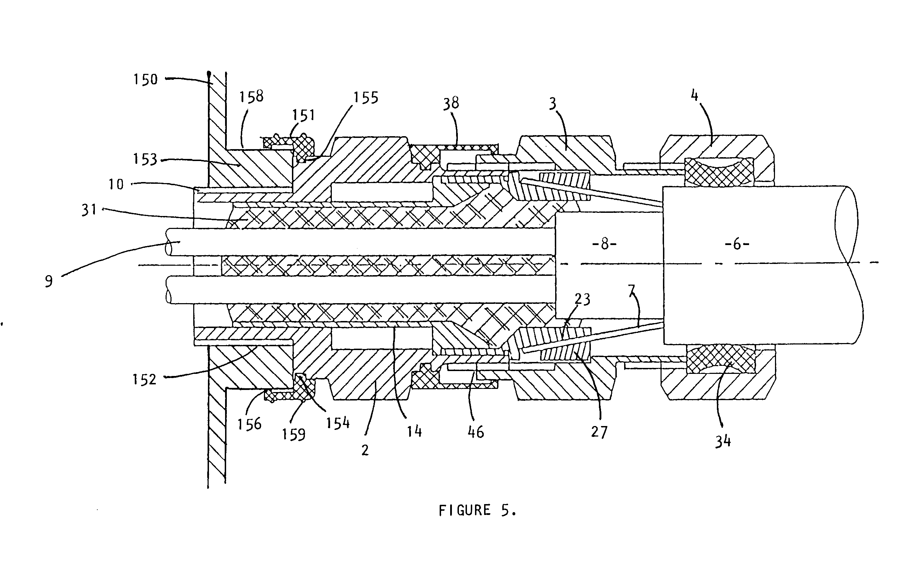

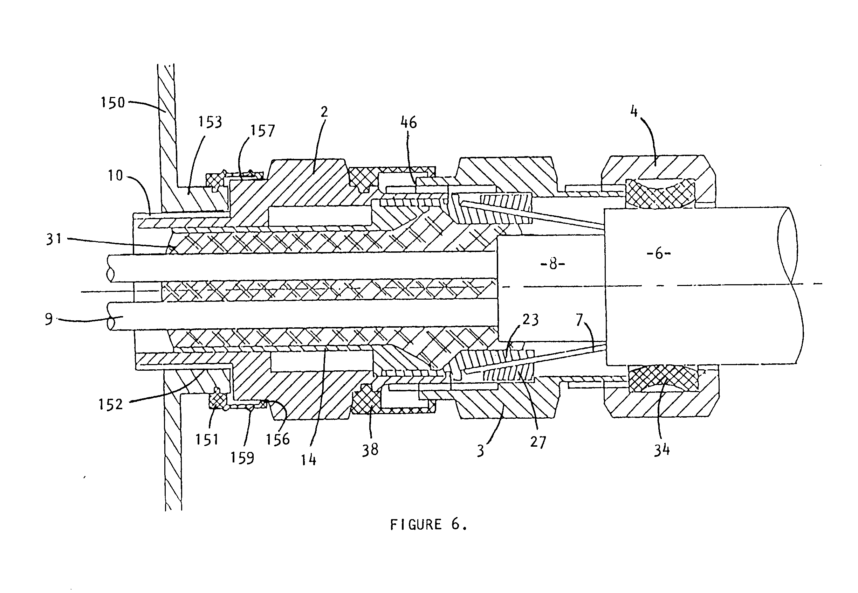

Additionally, it will be understood that the invention has application to the coupling between the gland and a component to which the gland is secured. Thus, Figures 5 and 6 depict the cable gland shown in Figures 1 and 2 connected to a junction box 150 and a further boot 151 is provided for covering the coupling 152 between the gland body 2 and junction box 150. Like reference numerals are used to indicate parts of the gland corresponding to Figures 1 and 2.

The externally threaded end 10 of the gland body 2 is engageable with an internally threaded spigot 153 of the junction box 150, and the boot 151 extends between the outer surface of the spigot 153 and the outer surface of the gland body 2 beyond the external thread 10. Figure 5 shows the boot 151 mounted on the gland body 2 and Figure 6 shows the boot 151 mounted on the spigot 153.

The boot 151 is similar to the boot 38 and has an internal annular rib 154 at one end that is engageable with a complementary annular groove 155 formed in the gland body 2 or spigot 153 to axially locate the boot 151 thereon and an internal annular lip 156 at the other end that is rotatably and axially slidable on the cylindrical outer surface 157,158 of the gland body 2 or spigot 153 on relative rotation therebetween. The boot 151 is also locally strengthened against twisting for such relative rotation by external annular ribs 159.

The coupling between the cable gland shown in Figures 3 and 4 and a junction box may likewise be protected by an external boot similar to the boot 151.

It will be apparent that the axial length and diameter of the boot may be chosen to suit the dimensions of the components for which the boot is intended and that the embodiments above-described are exemplary of suitable boots without restricting the scope of the invention in any way.

The present invention also provides a cable gland assembly comprising a gland body through which a cable, pique or the like extends, a component connected to one end of the gland body, and an external tubular boot seal mounted on one of the gland body and component and engaging the other of the gland body and component to prevent ingress of foreign matter between the gland body and component.

The present invention further provides an external gland seal comprising a tubular boot adapted at one end for mounting on a first component and having an internal lip at the other end for engaging a cylindrical outer surface of a second component connected to the first component, the lip being arranged for rotational and axial movement on the cylindrical outer surface to maintain sealing engagement on relative rotation of the components.

Finally, it will be appreciated that the invention is not limited to cable glands and may be used for couplings between two relatively movable parts in other applications where it is desired to prevent ingress of solids, liquids or gases.

## Claims

1. Acoupling between first and second components (2,3;102,103;2,150) of a gland (1;101) or a gland (1;101) and a member (150) to which the gland (1;101) is secured in use, the first component (2;102) having an external thread (10;11) engageable with an internal thread (12;153) of the second component (3;103;150) characterised in that a tubular boot (38;138;151) is arranged to extend between an outer surface (45;145;157) of the second component (3;103;150) and an outer surface (40;140;157) of the first component (2;102) beyond the external thread (10;11).

2. A coupling according to Claim 1 characterised in that the boot (38;138;151) is mounted on the outer surface (40;140) of one of the components (2; 102) and is arranged to engage rotatably and slidably a cylindrical zone (45;145;157) of the outer surface of the other component (3;103;150).

3. A coupling according to Claim 2 characterised in that the boot (38;138;151) has a locating formation (41 ;141 ;154) at one end for engagement with h a complementary locating formation (42;142;155) on said one component (2;102) to axially locate the boot (38;138;151) thereon.

4. A coupling according to Claim 3 characterised in that the locating formations comprise an annular rib (41;141;154) engageable in an annular groove (42;142;155).

5. A coupling according to Claim 3 or Claim 4 characterised in that the boot (38;138;151) has a seal formation (44;144;156) at the other end for rotatably and slidably engaging the cylindrical zone (45;145;157) of the outer surface of the other component (3;103;150).

6. A coupling according to Claim 5 characterised in that the seal formation comprises an internal annular lip (44;144;156).

7. A coupling according to any one of the preceding Claims characterised in that the boot (38;138;151) extends with radial clearance over at least part of the external thread (10;11).

8. A coupling according to any one of the preceding Claims characterised in that the boot (38;138;151) has at least one external reinforcing formation (47;147;159).

9. A coupling according to any one of the preceding Claims characterised in that the boot (38;138;151) is made of natural or synthetic elastomeric material.

10. A coupling according to any one of the preceding Claims characterised in that the boot (38;138;151) is colour-coded.
